# FASCICULE DE BREVET EUROPEEN

(11) **EP 2 586 119 B1**
(45) Date de publication et mention de la délivrance du brevet: **12.08.2020**
(21) Numéro de dépôt: 11725870.7
(22) Date de dépôt: 30.05.2011
(51) Int. Cl.: H02K 5/24, B60H 1/00

(54) **SUPPORT MOTEUR A DISPOSITIF DE LIMITATION DE MOUVEMENTS**
MOTORBEFESTIGUNG MIT EINER VORRICHTUNG ZUR BEGRENZUNG VON BEWEGUNGEN
MOTOR MOUNTING HAVING A DEVICE FOR LIMITING MOVEMENTS

(30) Priorité: 24.06.2010 FR 1002652
(43) Date de publication de la demande: 01.05.2013
(73) Titulaire: Valeo Systèmes Thermiques, 78321 Le Mesnil St Denis (FR)
(72) Inventeur: TRUILLET, Franck, F-28410 Bu (FR)
(86) Numéro de dépôt international: PCT/EP2011/002655
(87) Numéro de publication internationale: WO 2012/000592

(56) Documents cités:
- EP-A1- 0 780 579
- US-A1- 2007 001 522
- US-A1- 2009 058 209

## Description

Le secteur technique de la présente invention est celui des supports de moteur pour système de ventilation, chauffage et/ou climatisation pour véhicule automobile. Plus particulièrement, l'invention porte sur un tel support équipé de moyen pour limiter le mouvement des composants internes au support précité.

Dans un système de ventilation, chauffage et/ou climatisation pour véhicule, le flux d'air y circulant est propulsé par une roue de pulseur mise en rotation par un moteur électrique. Ce moteur est reçu dans une cavité d'un support moteur, ce dernier étant solidarisé sur le boîtier de l'installation de sorte à fermer une volute dans laquelle nait la circulation du flux d'air.

Le support moteur est classiquement constitué d'une bague externe et d'un dispositif de réception d'un moteur électrique qui s'étend selon un axe longitudinal. Pour éviter la transmission des vibrations causées par le moteur, le dispositif de réception est relié à la bague externe par un moyen de découplage, ce dernier agissant comme un amortisseur de vibration. Le document US2007/001522 divulgue un tel support moteur.

Pour atteindre un bon niveau de découplage, il est nécessaire de concevoir le moyen de découplage de manière relativement souple. Cependant, la température environnant ce moyen de découplage joue un rôle majeur dans la souplesse de ce dernier. En effet, en cas température élevée, le moyen de découplage devient trop souple au point que le dispositif de réception du moteur se déplace au delà des tolérances dimensionnelles, ce qui dans certains cas provoque un contact entre une roue de pulseur mise en mouvement par le moteur électrique et la volute.

On comprend donc que la souplesse du moyen de découplage doit répondre à un compromis amortissement - déplacement où la contrainte de déplacement limite les possibilités d'amortissement du moyen de découplage. Il s'agit donc d'un inconvénient du dispositif de l'art antérieur que l'invention se propose de résoudre.

En outre, le dispositif de réception se déplace également en cas de choc lors du roulement du véhicule. Par exemple, lorsque le véhicule roule sur une route pavée ou rencontre un trou dans la chaussée (« nid-de-poule »), le moyen de découplage subit de fortes contraintes mécaniques qui peuvent engendrer des déplacements du dispositif de réception au-delà des tolérances dimensionnelles, ce qui provoque donc un contact entre la roue de pulseur et la volute.

Enfin, si le découplage exercé par le moyen de découplage est trop souple et provoque un mouvement du dispositif de réception trop important, le simple balourd de la roue de pulseur lors de sa rotation peut entraîner des déplacements du dispositif de réception impliquant un frottement de la roue de pulseur sur la volute et donc une nuisance sonore importante et un risque de dégradation de la roue ainsi que du moteur.

Le but de la présente invention est donc de concevoir un moyen de découplage qui est n'est pas impacté par les contraintes de déplacement du moteur et de son dispositif de réception, ce qui permet d'atteindre un haut niveau d'amortissement, tout en limitant le déplacement du dispositif de réception par un moyen distinct du dispositif de découplage.

L'invention a donc pour objet un support moteur d'un groupe moto-ventilateur selon la revendication 1.

Selon une première variante de l'invention, le moyen pour limiter le mouvement comprend un dispositif de limitation du mouvement axial. Ce dispositif a donc pour fonction d'empêcher un déplacement supérieur à 2 mm entre le dispositif de réception et la bague externe dans la direction de l'axe longitudinal du moteur.

Selon une première caractéristique de l'invention, le dispositif de limitation du mouvement axial comprend une butée issue du dispositif de réception et qui fait face à une première zone d'appui présente sur la bague externe. En fonctionnement normal, cette butée n'est pas en contact sur la zone d'appui. En revanche, cette butée bloque le déplacement axial du dispositif de réception dès que l'amplitude de ce déplacement dépasse 2 mm.

Selon une deuxième caractéristique de l'invention, la butée s'étend au moins en partie à la périphérie du dispositif de réception mais il peut être avantageux que cette butée forme un annelet périphérique tout autour du dispositif de réception.

Selon une autre caractéristique de l'invention, la butée prend la forme d'un plat qui prend naissance sur le dispositif de réception et qui s'étend perpendiculairement à l'axe longitudinal, au moins un renfort reliant le dispositif de réception audit plat. Le renfort forme un coin dont le but est de reprendre les efforts mécaniques que subit le plat.

Selon encore une caractéristique de l'invention, la première zone d'appui prend la forme d'une cheminée qui s'étend radialement par rapport à l'axe longitudinal, ladite cheminée partageant une première paroi avec une paroi intermédiaire constitutive de la bague externe. La paroi intermédiaire est la paroi immédiatement co-axiale par rapport au dispositif de réception et cette paroi intermédiaire support le moyen de découplage. La forme de cheminée de la première zone d'appui provient des contraintes de démoulage de la bague externe quand cette dernière est formée d'un seul tenant à partir d'un matériau plastique.

Selon une deuxième variante de l'invention, le moyen pour limiter le mouvement comprend un dispositif de limitation du mouvement tangentiel. Ce dispositif de limitation du mouvement tangentiel a pour fonction d'empêcher ou de limiter un déplacement circulaire du dispositif de réception autour de l'axe longitudinal du moteur de l'ordre de 2 mm. On évite ainsi que le moyen de découplage subisse des contraintes mécaniques importantes susceptibles de l'endommager.

Selon une caractéristique de l'invention, le dispositif de limitation du mouvement tangentiel prend la forme d'une aile qui prend naissance sur le dispositif de réception et qui fait face à une deuxième zone d'appui présente sur la bague externe. Cette aile est une patte issue de moulage avec le dispositif de réception qui s'étend radialement par rapport à l'axe longitudinal et vers l'extérieur du dispositif de réception.

Selon une autre caractéristique de l'invention, le moyen de découplage comprend un plot flexible reçu dans un logement pratiqué sur la bague externe, ladite deuxième zone d'appui étant constitué par une partie dudit logement. Le plot est flexible en ce sens qu'il empêche la transmission des vibrations du dispositif de réception vers la bague externe. Le plot flexible est avantageusement surmoulé soit sur la bague externe est reçu dans un logement du dispositif de réception, soit surmoulé sur le dispositif de réception et reçu dans un logement de la bague externe, soit surmoulé sur la bague externe et sur le dispositif de réception.

Alternativement, ledit logement comprenant un évidement au droit dudit plot, ladite deuxième zone d'appui étant constituée par une partie du plot au droit de l'évidement. On comprend ici que l'aile vient en contact du plot flexible plutôt que sur le logement ce qui permet d'éviter tout bruit quand l'aile vient en contact sur la deuxième zone d'appui.

Ainsi, l'aile vient en contact sur la deuxième zone d'appui par l'intermédiaire d'au moins une tranche.

Avantageusement, le dispositif de réception comprend une bague interne et un anneau, la bague interne et l'anneau étant distincts et reliés l'un à l'autre par au moins un moyen de fixation. La bague interne et l'anneau sont présente chacun au moins une partie cylindrique de diamètre identique.

L'invention prévoit que le support moteur est équipé d'un dispositif de rattrapage de jeu tangentiel entre l'anneau et la bague interne. Il s'agit ici d'un jeu en rotation autour de l'axe longitudinal.

Selon une caractéristique de l'invention, le dispositif de rattrapage de jeu tangentiel comprend au moins une languette flexible issue de l'anneau et située à la périphérie externe de cet anneau, ladite languette prenant appui contre ledit moyen de découplage. Cette languette est avantageusement formée à partir du plat formant la butée du dispositif de limitation du mouvement axial et présente une forme générale en « V », de sorte a lui apporter la flexibilité requise.

L'invention prévoit également que le support moteur est équipé un dispositif de rattrapage de jeu axial entre l'anneau et la bague interne. Le jeu axial correspond au déplacement de l'anneau par rapport à la bague interne selon la direction de l'axe longitudinal. Ce dispositif de rattrapage de jeu axial joue son rôle en combinaison avec le moyen de fixation.

Avantageusement, le dispositif de rattrapage de jeu axial comprend un bord d'appui issu de l'anneau qui est situé à la périphérie externe dudit anneau, ledit bord d'appui s'étendant dans un secteur angulaire croisant un secteur angulaire dans lequel s'étend le moyen de découplage.

Le moyen de découplage comprend un plot flexible reçu dans un logement pratiqué sur la bague externe, ledit bord d'appui étant en contact avec ledit plot flexible.

La bague interne du dispositif de réception comprend ainsi l'aile du dispositif de limitation du mouvement tangentiel, cet ensemble étant unitaire et formé dans un même matériau.

L'anneau du dispositif de réception comprend de son côté la butée du dispositif de limitation du mouvement axial, la languette dispositif de rattrapage de jeu tangentiel et le bord d'appui du dispositif de rattrapage de jeu axial, cet ensemble étant unitaire et formé d'un seul tenant à partir d'un même matériau.

Un tout premier avantage selon l'invention réside dans la possibilité de mettre en oeuvre un moyen de découplage présentant de hautes propriétés d'amortissement, ce qui permet d'abaisser le niveau acoustique lié au moteur à l'intérieur de l'habitacle du véhicule au bénéfice de l'utilisateur. Cette amélioration se fait néanmoins en limitant le déplacement du moteur de sorte à ne pas créer de bruit inopportun par ailleurs, par exemple entre la roue montée sur l'axe du moteur et la volute qui reçoit le support moteur.

Un autre avantage de l'invention réside dans la possibilité de limiter les contraintes mécaniques tangentielles appliquées au moyen de découplage.

Un autre avantage réside dans l'amélioration de la fiabilité de l'assemblage entre l'anneau et la bague interne du dispositif de réception du moteur.

D'autres caractéristiques, détails et avantages de l'invention ressortiront plus clairement à la lecture de la description donnée ci-après à titre indicatif en relation avec des dessins dans lesquels :
- la figure 1 est un éclaté d'un groupe moto-ventilateur mettant en œuvre un mode de réalisation de l'invention,
- la figure 2 est une vue en perspective du support moteur objet de l'invention,
- la figure 3 est une vue partielle illustrant des détails du support moteur selon l'invention,
- la figure 4 est une vue en perspective illustrant certains détails de l'invention,
- la figure 5 est une vue partielle montrant le dispositif de fixation entre l'anneau et la bague interne,
- la figure 6 est une vue de dessus illustrant un exemple de moyen pour limiter un mouvement du dispositif de réception par rapport à la bague externe d'un support selon l'invention,
- la figure 7 est une vue schématique montrant en détail le moyen illustré à la figure 6,
- la figure 8 est une vue en perspective d'un exemple de dispositif de rattrapage de jeu équipant le support moteur objet de l'invention,
- la figure 9 est une vue schématique montrant certains détails de la figure 8. Il faut noter que les figures exposent l'invention de manière détaillée, lesdites figures peuvent bien entendu servir à mieux définir l'invention le cas échéant.

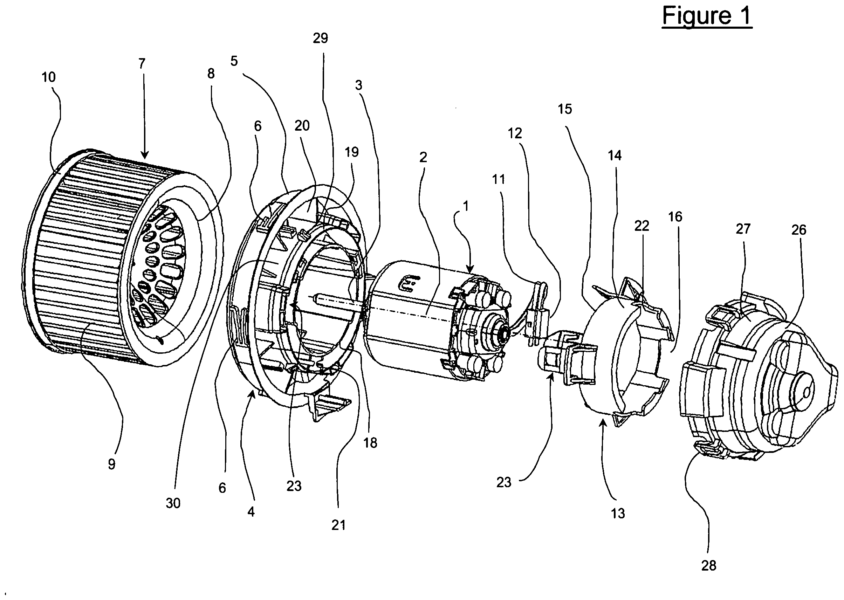

La figure 1 montre l'invention dans un exemple de réalisation où un dispositif de réception d'un moteur électrique 1 est mis en œuvre dans un groupe moto-ventilateur d'une installation de ventilation, chauffage et/ou climatisation équipant un véhicule automobile. Le moteur 1 s'étend selon un axe longitudinal 2 qui passe au centre de ce dernier, cet axe étant l'axe principal du moteur dans lequel un arbre 3 s'étend. Cet arbre 3 est supporté par le moteur à chacune de ses extrémités, par exemple par des paliers ou des roulements.

Le moteur électrique 1 est maintenu dans un support moteur, ce dernier comprenant une bague externe 4, un dispositif de réception comprenant une bague interne 18 et un anneau 13, la bague interne 18 étant reliée à la bague externe 4 par un moyen de découplage 21.

Le support moteur est en matière plastique, par exemple du polypropylène, et présente une forme circulaire creuse, c'est-à-dire présentant un évidement central pour recevoir le moteur 1. Cet évidement central est délimité par la bague interne 18.

La bague externe 4 est constituée d'une paroi périphérique externe 5 qui entoure la bague interne 18 et comprend des moyens de solidarisation 6 qui servent à fixer le support moteur sur un boîtier constitutif de l'installation de ventilation, chauffage et/ou climatisation.

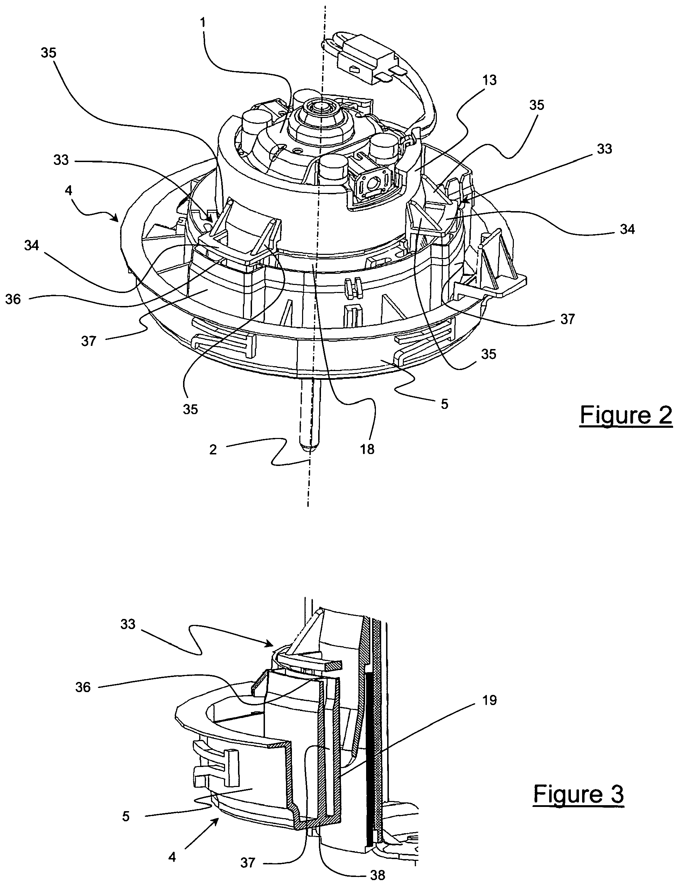

Entre la paroi externe 5 et la bague interne 18 est installée une paroi intermédiaire 19 reliée à la paroi externe 5 par des moyens d'espacement 20 et par un flanc 38 (visible sur la figure 3) qui joint le bord de la paroi externe 5 avec la paroi intermédiaire. Ces moyens d'espacement prennent la forme par exemple de bras qui s'étendent radialement par rapport à l'axe 2 et reliés d'un côté à la paroi externe 5 et de l'autre à la paroi intermédiaire 19.

La paroi intermédiaire 19 est par ailleurs reliée à la bague interne 18 par un au moins un moyen de découplage 21, ici au nombre de trois. Ce dernier est fabriqué dans un matériau plus souple que le matériau utilisé pour le support moteur de sorte à assurer une fonction d'isolation pour empêcher la transmission des vibrations générées par le moteur 1 entre la bague interne 18 et la paroi intermédiaire 19. Ce matériau est par exemple un élastomère ou caoutchouc.

La paroi externe 5, la paroi intermédiaire 19 et la bague interne 18 prennent la forme de tubes cylindriques creux installés de manière globalement concentrique les uns par rapport aux autres.

Le support moteur comprend au moins un premier moyen de blocage. De manière générale, ce premier moyen de blocage débouche de la bague interne 18 en direction de l'arbre 3 du moteur 1. Le premier moyen de blocage participe au maintien et à la solidarisation du moteur 1 dans le dispositif de réception.

Le premier moyen de blocage est destiné à limiter le mouvement du moteur selon l'axe longitudinal. Le moteur électrique 1 vient donc en appui par une de ses extrémités contre le premier moyen de blocage.

Dans le prolongement de la bague externe 4 et à gauche de cette dernière est montrée une roue de pulseur 7 en matière plastique qui prend la forme d'un bol 8, par exemple partiellement ajouré, à la périphérie duquel s'étend une multiplicité de pales 9. Cette multiplicité de pales 9 est reliée d'un côté au bol 8 et de l'autre à un bord circulaire 10 qui rejoint chacune des pales 9. On notera que ces pales 9 s'étendent selon une direction parallèle à la direction de l'axe longitudinal 2.

Cette roue de pulseur 7 prend donc la forme d'une hélice en forme de cage d'écureuil mais il pourrait aussi s'agir d'une hélice radiale, par exemple plate, où les pales s'étendent sensiblement perpendiculairement par rapport à la direction de l'axe longitudinale 2.

La roue de pulseur 7 est solidarisée sur l'arbre 3 par un moyeu disposé au centre du bol 8, moyeu au travers duquel passe l'arbre 3.

A droite du moteur 1 sur la figure 1, on peut voir un faisceau électrique 11 à l'extrémité duquel est installé un connecteur 12 qui permet de raccorder électriquement le moteur à un dispositif de commande du groupe moto-ventilateur.

Encore à droite du moteur 1 est visible un anneau 13 qui participe à la réception et à la solidarisation du moteur 1 dans le dispositif de réception du moteur 1, en combinaison avec la bague interne 18. Cet anneau 13 est en matière plastique, par exemple du polypropylène, et prend une forme circulaire creuse.

L'anneau 13 est constitué d'un corps 14, par exemple circulaire, présentant une première extrémité ouverte 15 tournée vers la bague interne 18 et une seconde extrémité ouverte 16 opposée à la première extrémité 15 par rapport au corps 14.

L'anneau 13 et la bague interne 18 sont deux pièces distinctes et séparées, c'est-à-dire fabriquées indépendamment l'une par rapport à l'autre, et assemblées l'une avec l'autre à l'aide du moyen de fixation 23.

Au moins un second moyen de blocage, référencé sur cette figure 22, est formé sur le corps 14 de l'anneau 13 au niveau de la seconde extrémité 16. Ce second moyen de blocage s'étend angulairement, autrement dit radialement par rapport à l'axe 2 vers l'arbre 3 du moteur 1 et forme ainsi une butée qui limite ou bloque le déplacement du moteur 1, ce dernier venant en appui contre le second moyen de blocage 22 par appui de son extrémité contre la butée formant le second moyen de blocage 22.

A titre d'exemple de réalisation, le second moyen de blocage 22 forme un bandeau circulaire continu sur le corps 14. A titre d'alternative et comme représenté sur la figure 1, le second moyen de blocage 22 est formé de manière discontinue. Autrement dit, le second moyen de blocage 22 est formé d'au moins une languette radiale issue du corps 14 au droit de la seconde extrémité 16, la seconde extrémité étant dépourvue de cette languette sur au moins un secteur angulaire.

Le premier moyen de blocage fait face au second moyen de blocage 22, ainsi le moteur électrique 1 est intercalé entre ces deux moyens de blocage. Le premier moyen de blocage retient le moteur électrique 1 dans un premier sens selon l'axe longitudinal 2 alors que le second moyen de blocage 22 bloque le déplacement ou le mouvement du moteur dans une même direction, c'est-à-dire selon l'axe longitudinal 2, mais dans un sens opposé au sens de retenu du moteur 1 opéré par le premier moyen de blocage.

Le dispositif de réception comprend au moins un moyen de fixation 23 dont le but est de relier l'anneau 13 à la bague interne 18. Autrement dit, ce moyen de fixation 23 a pour fonction de solidariser mécaniquement ces deux pièces de sorte à définir un volume qui enferme le moteur 1.

Préférentiellement, le moyen de fixation 23 est amovible en ce sens que la liaison mécanique entre la bague interne 18 et l'anneau 13 est démontable sans destruction de l'une ou l'autre de ces pièces.

A l'extrémité droite de la figure 1 est montrée un capot 26 qui prend la forme de cuvette creuse et dont la fonction est de fermer la partie arrière du groupe moto-ventilateur. Ce capot 26 est distinct, c'est-à-dire séparé de la bague interne 18 et de l'anneau 13, et rapporté sur ledit support moteur après assemblage et solidarisation de l'anneau 13 sur la bague interne 18.

Ce capot 26 comprend une paroi périphérique 27 qui borde une extrémité ouverte de ce capot est de laquelle débouche au moins un clips de fixation 28 qui se présente sous la forme d'une patte en forme de « U » attachée à chaque extrémité des branches du « U » à la paroi périphérique 27.

Ces clips de fixation 28 coopèrent avec des ergots 29 issues de moulage avec la bague externe 4. Plus précisément, ces ergots 29 sont formés sur la paroi intermédiaire 19 du support moteur. A titre d'exemple, ces ergots sont formés sur la face 30 de la paroi intermédiaire 19 qui est tournée vers la paroi externe 5 de la bague externe 4.

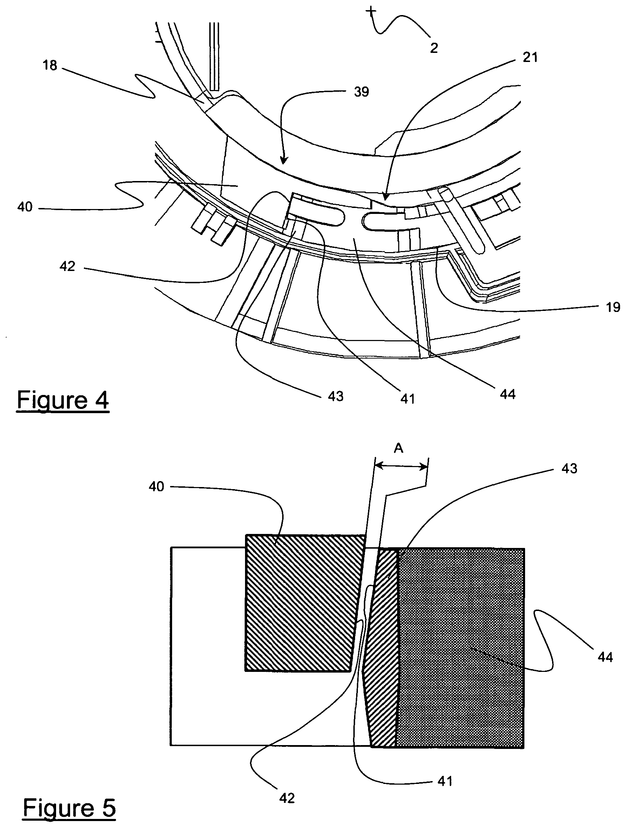

Le support moteur selon l'invention comprend un moyen 31 pour limiter un mouvement du dispositif de réception par rapport à la bague externe. Ce moyen 31 pour limiter le mouvement du dispositif de réception par rapport à la bague externe 4 prend la forme d'un dispositif de limitation du mouvement axial, c'est-à-dire un déplacement selon la direction de l'axe longitudinal 2. Un exemple d'un dispositif de rattrapage de jeu tangentiel 39 sera plus détaillé en regard de la figure 4.

La figure 2 illustre le support moteur objet de l'invention. Le moteur 1 est monté dans le dispositif de réception constitué par la bague interne 18 et l'anneau 13. Le support moteur comprend ici trois dispositifs de limitation du mouvement axial répartis à la périphérie de l'anneau 13 selon un secteur angulaire par exemple de 120°.

Le dispositif de limitation du mouvement axial comprend une butée 33 issue du dispositif de réception. Cette butée forme avec l'anneau 13 une pièce d'un seul tenant. En pratique, l'anneau 13 et la butée 33 sont moulés ensemble à partir de la même matière plastique. La butée 33 prend la forme d'un plat 34 ajouré en son centre de sorte à former un « U » où les branches de ce « U » prennent naissance sur une paroi périphérique externe de l'anneau 13. Ce plat 34 s'étend perpendiculairement à l'axe longitudinal 2, c'est-à-dire radialement vers l'extérieur de l'anneau 13.

La butée 33 s'étend au moins en partie à la périphérie du dispositif de réception par secteur angulaire compris entre 2° et 10°. De manière alternative, la butée est formée par un annelet périphérique qui occupe toute la périphérie de l'anneau 13.

La butée 33 est renforcée mécaniquement par au moins un renfort 35. Dans le cas d'espèce, chaque butée 33 est renforcée par deux renforts 35 disposés aux extrémités de la butée. Ces renforts 35 prennent la forme de coin moulé en même temps que les plats 34 et l'anneau 13. Ce coin présente une forme triangulaire où un premier côté est relié à l'anneau 13, un deuxième côté est relié au plat 34 et un troisième côté demeure libre.

La figure 3 montre un exemple de réalisation de la butée 33 qui fait face à une première zone d'appui 36 présente sur la bague externe 4. La première zone d'appui 36 prend la forme d'un bord d'une cheminée 37 qui s'étend radialement et axialement par rapport à l'axe longitudinal 2. Cette cheminée 37 partage une paroi avec la paroi intermédiaire 19 qui constituent, avec la paroi externe 5, la bague externe 4. Autrement dit, cette cheminée 37 s'étend sur la périphérie externe de la paroi intermédiaire 19 et sur la hauteur de cette dernière.

La première zone d'appui 36 ou le plat 34 peut être recouvert d'une couche d'élastomère, d'EPDM ou de caoutchouc de sorte à amortir le contact entre le plat et le bord de la cheminée et ainsi limiter le bruit consécutif au contact.

La figure 4 montre plus particulièrement une variante de réalisation d'un moyen pour limiter le mouvement du dispositif de réception par rapport à la bague externe. Dans le cas présent, ce moyen est constitué par un dispositif de limitation du mouvement tangentiel 39 qui prend la forme d'une aile 40 formée sur la bague interne 18. A titre d'exemple de réalisation, l'aile 40 est moulée simultanément avec la bague interne 18 de sorte à former une seule et unique pièce.

Cette aile 40 prend naissance sur le dispositif de réception, et plus particulièrement sur la bague interne 18. Alternativement, cette aile est moulée avec l'anneau. Cette aile 40 s'étend radialement par rapport à l'axe longitudinal 2 vers l'extérieur de la bague interne 18. Cette aile 40 s'étend dans l'espace qui sépare la bague interne 18 et la paroi intermédiaire 19 et se termine à proximité immédiate de la paroi intermédiaire 19. Cette aile 40 comprend une tranche 42 constituée par l'épaisseur de l'aile 40 et cette tranche 42 vient en contact sur une deuxième zone d'appui 41 formée sur la bague externe 4 lorsque le mouvement tangentiel est important. Ainsi, lorsque le moteur vibre peu, c'est-à-dire lors de conditions d'utilisation normales, la tranche 42 n'est pas en contact avec la deuxième zone d'appui 41. A titre d'exemple, cette zone d'appui 41 est formée par une partie d'un logement 43 qui réceptionne un plot flexible 44, ces deux éléments constituant le moyen de découplage 21.

Le logement 43 est ici formé sur la paroi intermédiaire 19 et plus particulièrement sur une face interne de la paroi intermédiaire 19 tournée vers la bague interne 18.

Dans une amélioration du dispositif de limitation du mouvement tangentiel 39, il est prévu une évidement dans le logement 43 au droit ou en face du plot flexible 44 et dans le prolongement d'un plan dans lequel s'étend l'aile 40. Ainsi, la deuxième zone d'appui est constituée par une partie du plot flexible au niveau de l'évidement. Ceci permet de contrecarrer le bruit qui peut survenir quand le contact entre la tranche 42 de l'aile 40 et la deuxième zone d'appui intervient.

La figure 5 montre la position de l'aile 40 par rapport au logement 43 qui reçoit le plot flexible 44. Un jeu A de l'ordre de deux millimètres est présent entre la tranche 42 et ce logement 43 quand le moyen de découplage est soumis à des contraintes mécaniques acceptables. Quand la température dépasse un certain seuil, le plot flexible 44 devient plus élastique et le déplacement tangentiel est limité par le contact entre l'aile 40 et la deuxième zone d'appui 41.

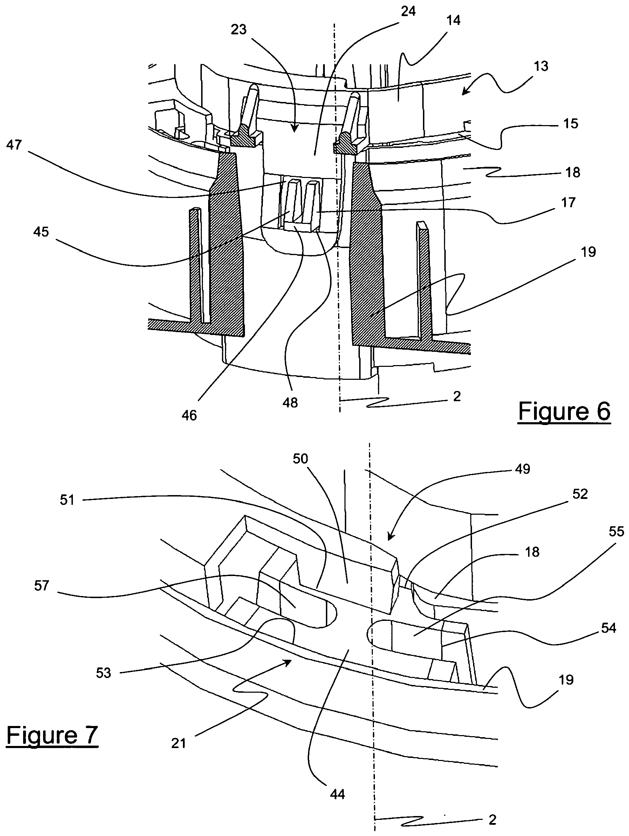

La figure 6 montre en détail la constitution du dispositif de réception du moteur électrique. La bague interne 18 et l'anneau 13 sont deux pièces distinctes et reliées l'une à l'autre par au moins un moyen de fixation 23. A titre d'exemple, le dispositif de réception compte trois moyens de fixation 23 répartis selon des secteurs angulaires par exemple égal à 120°.

Pour des besoins de représentation, la paroi intermédiaire 19 est représentée de manière découpée (hachures) de sorte à rendre apparent le moyen de fixation 23.

Le moyen de fixation 23 comprend une excroissance 24 qui s'étend du corps 14 selon une direction parallèle à l'axe longitudinal 2 et dépasse la première extrémité 15 en direction de la roue 7. A titre d'exemple, il s'agit d'au moins trois bras qui débouchent à la périphérie du corps 14.

Le moyen de fixation 23 comprend également une dent 17 formée sur la bague interne 18. A titre d'exemple, la dent 17 débouche d'une face constitutive de la bague interne 18 tournée vers la paroi intermédiaire 19.

La dent 17 s'étend radialement par rapport à l'axe longitudinal 2 et vers l'extérieur de la bague interne 18. Cette dent prend la forme d'une dent de retenue de l'excroissance 24 pratiquée sur l'anneau 13. Cette dent 17 présente une rampe 45 inclinée et terminée par un bord d'attaque 46 disposé perpendiculairement à l'axe longitudinal 2.

Cette excroissance 24 comprend un compartiment de réception 47 de la dent 17 issue de la bague interne 18. Ce compartiment 47 prend la forme d'un trou traversant pratiqué à une extrémité libre de l'excroissance 24 mais il peut s'agir aussi d'un logement non débouchant à l'intérieur duquel la dent 17 vient s'accrocher.

La solidarisation de l'anneau 13 avec la bague 18 intervient quand un bord 48 du compartiment de réception 47 vient en appui contre le bord d'attaque 46. On notera que l'excroissance 24 présente une épaisseur définie de sorte à la rendre flexible et ainsi se déformer quand l'anneau 13 est en phase d'assemblage sur la bague interne 18.

Ce moyen de fixation 23 participe du maintien et de la solidarisation du moteur électrique 1 en coopération avec le premier moyen de blocage formé sur la bague interne 18 et le second moyen de blocage 22 formé sur l'anneau 13.

La figure 7 montre un dispositif de rattrapage de jeu axial 49 entre l'anneau et la bague interne. En effet, les tolérances dimensionnelles des moteurs électriques imposent une tolérance pour solidariser l'anneau 13 sur la bague interne 18. Dans ce cas la longueur du moteur est inférieure à la longueur du volume interne du dispositif de réception de sorte qu'il existe un jeu entre le bord 48 du compartiment de réception 47 et le bord d'attaque 46 de la dent 17.

Le dispositif de rattrapage de jeu axial 49 corrige cet inconvénient au moyen d'un bord d'appui issu de l'anneau 13 qui en contact contre le moyen de découplage. Ce bord d'appui est situé à la périphérie externe de l'anneau 13 de sorte à être dans le prolongement du moyen de découplage 21.

Ce bord d'appui prend la forme d'un doigt 50 issue de moulage avec l'anneau 13. Ce doigt 50 présente une arête 51 en contact avec le plot flexible constitutif du moyen de découplage 21. De préférence, l'arête 51 est en contact avec le plot au niveau de la partie du plot la plus proche de la bague interne 18. On notera que la longueur de cette arête 51 est inférieure à la largeur du logement 43 qui reçoit le plot flexible 44 de sorte à garantir un contact contre une pièce élastique. Autrement dit, le doigt 50 s'étend dans un secteur angulaire qui croise le secteur angulaire dans lequel s'étend le moyen de découplage, et plus particulièrement le plot flexible 44.

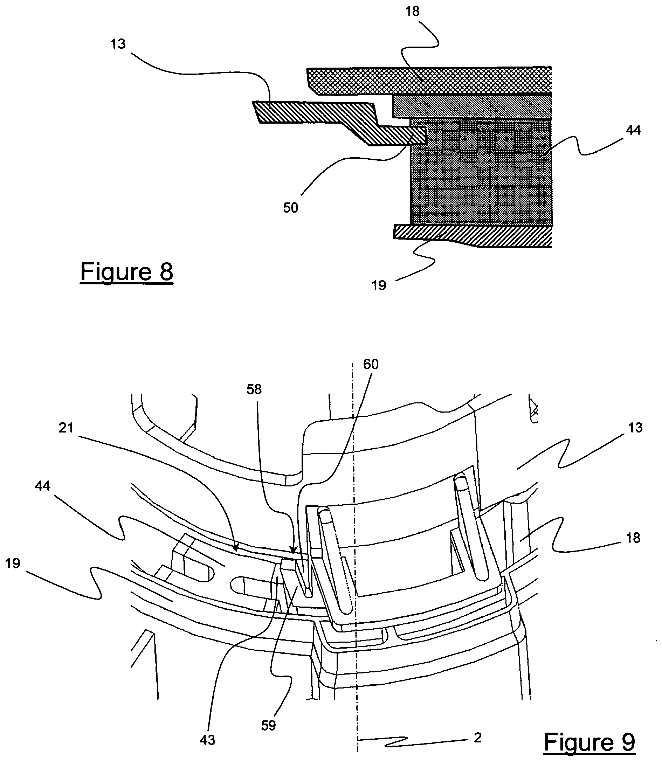

L'interférence entre le doigt 50 et le plot flexible 44 est illustrée en coupe sur la figure 8. On constate que, quand l'anneau 13 est assemblé à la bague interne 18, le doigt 50 pénètre dans la matière élastique constitutive du plot flexible 44.

L'effet de ressort du plot flexible 44 sur le doigt 50 provoque un écartement entre l'anneau et la bague interne de sorte à plaquer le bord 48 du compartiment de réception 47 contre le bord d'attaque 46 de la dent 17 quelque soit l'écart dimensionnel entre différents moteurs.

Le moyen de découplage 21 de l'invention est montré à titre d'exemple sur la figure 7. Ce moyen de découplage est un plot parallélépipédique comprenant un premier côté 52 en contact direct avec la bague interne 18 du support moteur.

Le moyen de découplage comprend un deuxième côté 53 en contact direct avec la paroi intermédiaire 19 du support moteur et un troisième côté 54 libre s'étendant parallèlement à l'axe longitudinal 2 du moteur. Le troisième côté 54 présente au moins un évidement 55 s'étendant selon une direction parallèle à l'axe longitudinal 2.

Le moyen de découplage 21 comprend un quatrième côté 56 présentant lui aussi au moins un évidement 57. La structure spécifique du moyen de découplage assure le découplage entre le moteur 1 et le support moteur quelque soit le type de vibrations provoquées par la mise en œuvre du moteur et de la roue de pulseur. Ainsi, les vibrations de type axial et de type tangentiel sont absorbées par le moyen de découplage 21. L'évidement 55 et/ou 57 créé selon une direction parallèle à l'axe longitudinale 2 confère une souplesse du plot flexible 44 par rapport à une contrainte axiale et à une contrainte tangentielle tout en conservant une rigidité du plot par rapport à une contrainte radiale.

De manière avantageuse, le moyen de découplage 21 est conformé en H.

La figure 9 montre un dispositif de rattrapage de jeu tangentiel 58 entre l'anneau 13 et la bague interne 18. Ce dispositif de rattrapage de jeu tangentiel 58 comprend au moins une languette flexible 59 issue de l'anneau 13. Cette languette flexible 59 est moulée en même temps que l'anneau 13 et prend naissance sur une face inférieure du bras 34 constitutif du dispositif de limitation du mouvement axial. Cette languette flexible 59 s'étend dans une direction sensiblement parallèle à l'axe longitudinal 2 et s'étend dans l'espace interstitiel qui sépare la paroi intermédiaire 19 et la bague interne 18.

Cette languette 59 présente une flexibilité au moyen d'une fente 60 d'axe parallèle à l'axe longitudinal 2 de sorte à définir une languette flexible 59 en forme de « V ».

Cette languette flexible 59 comprend une arête qui prend contre le moyen de découplage 21. A titre d'exemple, l'appui est effectué contre un cadre de réception 61 qui fait partie de la bague interne 18. Le plot flexible 44 vient se loger dans ce cadre de réception 61.

La languette flexible 59 représentée sur la figure 9 impose une rotation de l'anneau par rapport à la bague interne dans le sens anti-horaire. Il est bien entendu prévu une butée en rotation pour que la languette flexible 59 reste dans sa zone de résilience, cette butée pouvant en pratique être opérée par un contact entre le compartiment de réception 47 et la dent 17.

Il est également possible de prévoir un second dispositif de rattrapage de jeu tangentiel dans lequel une languette flexible exerce un effort de rotation dans une direction opposé à la languette flexible du premier dispositif de rattrapage de jeu tangentiel, c'est-à-dire dans le sens horaire.

L'invention couvre bien entendu un support moteur qui comprend le moyen pour limiter au moins un mouvement du dispositif de réception par rapport à la bague externe, ce moyen comprenant un dispositif de limitation du mouvement axial et un dispositif de limitation du mouvement tangentiel, accompagné d'un dispositif de rattrapage de jeu tangentiel entre l'anneau et la bague interne et d'un dispositif de rattrapage de jeu axial entre cet anneau et cette bague interne.

## Revendications

1. Support moteur d'un groupe moto-ventilateur d'une installation de ventilation pour véhicule, comprenant une bague externe (4) et un dispositif de réception d'un moteur électrique (1) qui s'étend selon un axe longitudinal (2), ledit dispositif de réception, comprenant une bague interne (18) et un anneau (13), est relié à ladite bague externe (4) par un moyen de découplage (21), le support moteur comprenant un moyen pour limiter au moins un mouvement axial du dispositif de réception par rapport à la bague externe (4) **caractérisé en ce que** le dispositif de limitation du mouvement axial (31) comprend une butée (33) issue du dispositif de réception et qui fait face à une première zone d'appui (36) présente sur la bague externe (4).

2. Support moteur selon la revendication 1, dans lequel la butée (33) prend la forme d'un plat (34) qui prend naissance sur le dispositif de réception et qui s'étend perpendiculairement à l'axe longitudinal (2), au moins un renfort (35) reliant le dispositif de réception audit plat (34).

3. Support moteur selon l'une des revendications 1 ou 2, dans lequel la première zone d'appui (36) prend la forme d'une cheminée (37) qui s'étend radialement par rapport à l'axe longitudinal (2), ladite cheminée (37) partageant une paroi avec une paroi intermédiaire (19) constitutive de la bague externe (4).

4. Support moteur selon l'une quelconque des revendications précédentes, dans lequel le moyen pour limiter le mouvement comprend un dispositif de limitation du mouvement tangentiel (39).

5. Support moteur selon la revendication 4, dans lequel le dispositif de limitation du mouvement tangentiel (39) prend la forme d'une aile (40) qui prend naissance sur le dispositif de réception et qui fait face à une deuxième zone d'appui (41) présente sur la bague externe (4).

6. Support moteur selon la revendication 5, dans lequel le moyen de découplage (21) comprend un plot flexible (44) reçu dans un logement (43) pratiqué sur la bague externe (4), ladite deuxième zone d'appui (41) étant constitué par une partie dudit logement (43).

7. Support moteur selon la revendication 5, dans lequel le moyen de découplage (21) comprend un plot flexible (44) reçu dans un logement (43) pratiqué sur la bague externe (4), ledit logement (43) comprenant un évidement au droit dudit plot flexible (44), ladite deuxième zone d'appui (41) étant constituée par une partie du plot flexible (44) au droit de l'évidement.

8. Support moteur selon l'une quelconque des revendications précédentes, dans lequel la bague interne (18) et l'anneau (13) sont distincts et reliés l'un à l'autre par au moins un moyen de fixation (23).

9. Support moteur selon la revendication 8, dans lequel est prévu un dispositif de rattrapage de jeu tangentiel (58) entre l'anneau (13) et la bague interne (18).

10. Support moteur selon la revendication 9, dans lequel le dispositif de rattrapage de jeu tangentiel (58) comprend au moins une languette flexible (59) issue de l'anneau (13) et située à la périphérie externe de cet anneau (13), ladite languette flexible (59) prenant appui contre ledit moyen de découplage (21).

11. Support moteur selon l'une quelconque des revendications 8 à 10, dans lequel est prévu un dispositif de rattrapage de jeu axial (49) entre l'anneau (13) et la bague interne (18).

12. Support moteur selon la revendication 11, dans lequel le dispositif de rattrapage de jeu axial (49) comprend un doigt (50) issu de l'anneau (13) et qui est situé à la périphérie externe dudit anneau (13), ledit doigt (50) s'étendant dans un secteur angulaire croisant un secteur angulaire dans lequel s'étend le moyen de découplage (21).

## Patentansprüche

1. Motorhalterung einer Gebläseeinheit einer Lüftungsanlage für ein Fahrzeug, welche eine äußere Hülse (4) und eine Vorrichtung zur Aufnahme eines Elektromotors (1), welche sich entlang einer Längsachse (2) erstreckt, umfasst, wobei diese Aufnahmevorrichtung, die eine innere Hülse (18) und einen Ring (13) umfasst, mit der äußeren Hülse (4) durch ein Entkopplungsmittel (21) verbunden ist, wobei die Motorhalterung ein Mittel zum Begrenzen wenigstens einer axialen Bewegung der Aufnahmevorrichtung in Bezug auf die äußere Hülse (4) umfasst, **dadurch gekennzeichnet, dass** die Vorrichtung zur Begrenzung der axialen Bewegung (31) einen Anschlag (33) umfasst, der an die Aufnahmevorrichtung angeformt ist und der einem ersten Anlagebereich (36) zugewandt ist, der an der äußeren Hülse (4) vorhanden ist.

2. Motorhalterung nach Anspruch 1, wobei der Anschlag (33) die Form einer ebenen Fläche (34) aufweist, welche von der Aufnahmevorrichtung ausgeht und welche sich senkrecht zur Längsachse (2) erstreckt, wobei wenigstens eine Versteifung (35) die Aufnahmevorrichtung mit der ebenen Fläche (34) verbindet.

3. Motorhalterung nach einem der Ansprüche 1 oder 2, wobei der erste Anlagebereich (36) die Form eines Schachtes (37) aufweist, welcher sich radial in Bezug auf die Längsachse (2) erstreckt, wobei der Schacht (37) eine Wand mit einer Zwischenwand (19) gemeinsam hat, die Bestandteil der äußeren Hülse (4) ist.

4. Motorhalterung nach einem der vorhergehenden Ansprüche, wobei das Mittel zum Begrenzen der Bewegung eine Vorrichtung zur Begrenzung der tangentialen Bewegung (39) umfasst.

5. Motorhalterung nach Anspruch 4, wobei die Vorrichtung zur Begrenzung der tangentialen Bewegung (39) die Form eines Flügels (40) aufweist, welcher von der Aufnahmevorrichtung ausgeht und welcher einem zweiten Anlagebereich (41) zugewandt ist, der an der äußeren Hülse (4) vorhanden ist.

6. Motorhalterung nach Anspruch 5, wobei das Entkopplungsmittel (21) einen flexiblen Klotz (44) umfasst, der in einem an der äußeren Hülse (4) ausgebildeten Aufnahmeraum (43) aufgenommen ist, wobei der zweite Anlagebereich (41) aus einem Teil des Aufnahmeraums (43) besteht.

7. Motorhalterung nach Anspruch 5, wobei das Entkopplungsmittel (21) einen flexiblen Klotz (44) umfasst, der in einem an der äußeren Hülse (4) ausgebildeten Aufnahmeraum (43) aufgenommen ist, wobei der Aufnahmeraum (43) eine Aussparung direkt bei dem flexiblen Klotz (44) umfasst, wobei der zweite Anlagebereich (41) aus einem Teil des flexiblen Klotzes (44) direkt bei der Aussparung besteht.

8. Motorhalterung nach einem der vorhergehenden Ansprüche, wobei die innere Hülse (18) und der Ring (13) verschieden sind und durch wenigstens ein Befestigungsmittel (23) miteinander verbunden sind.

9. Motorhalterung nach Anspruch 8, wobei eine Vorrichtung zur Nachstellung des Tangentialspiels (58) zwischen dem Ring (13) und der inneren Hülse (18) vorgesehen ist.

10. Motorhalterung nach Anspruch 9, wobei die Vorrichtung zur Nachstellung des Tangentialspiels (58) wenigstens eine flexible Zunge (59) umfasst, die an den Ring (13) angeformt ist und sich am Außenumfang dieses Ringes (13) befindet, wobei die flexible Zunge (59) an dem Entkopplungsmittel (21) zur Anlage kommt.

11. Motorhalterung nach einem der Ansprüche 8 bis 10, wobei eine Vorrichtung zur Nachstellung des Axialspiels (49) zwischen dem Ring (13) und der inneren Hülse (18) vorgesehen ist.

12. Motorhalterung nach Anspruch 11, wobei die Vorrichtung zur Nachstellung des Axialspiels (49) einen Finger (50) umfasst, der an den Ring (13) angeformt ist und der sich am Außenumfang des Ringes (13) befindet, wobei sich der Finger (50) in einem Winkelsektor erstreckt, der sich mit einem Winkelsektor überschneidet, in welchem sich das Entkopplungsmittel (21) erstreckt.

## Claims

1. Motor mount for a motor-fan unit of a ventilation installation for a vehicle, comprising an outer ring (4) and a device for receiving an electric motor (1) which extends along a longitudinal axis (2), said receiving device, comprising an inner ring (18) and an annular element (13), is connected to said outer ring (4) by a decoupling means (21), the motor mount comprising a means for limiting at least an axial movement of the receiving device relative to the outer ring (4), **characterized in that** the device for limiting the axial movement (31) comprises an abutment (33) that originates from the receiving device and that faces a first bearing zone (36) that is present on the outer ring (4).

2. Motor mount according to Claim 1, wherein the abutment (33) takes the form of a flat (34) which originates on the receiving device and which extends perpendicularly to the longitudinal axis (2), at least one reinforcement (35) connecting the receiving device to said flat (34).

3. Motor mount according to either of Claims 1 and 2, wherein the first bearing zone (36) takes the form of a hollow shaft (37) which extends radially relative to the longitudinal axis (2), said hollow shaft (37) sharing a wall with an intermediate wall (19) forming the outer ring (4).

4. Motor mount according to any one of the preceding claims, wherein the movement-limiting means comprises a device for limiting the tangential movement (39).

5. Motor mount according to Claim 4, wherein the device for limiting the tangential movement (39) takes the form of a wing (40) that originates on the receiving device and that faces a second bearing zone (41) that is present on the outer ring (4).

6. Motor mount according to Claim 5, wherein the decoupling means (21) comprises a flexible post (44) received in a recess (43) created in the outer ring (4), said second bearing zone (41) consisting of a portion of said recess (43).

7. Motor mount according to Claim 5, wherein the decoupling means (21) comprises a flexible post (44) received in a recess (43) created in the outer ring (4), said recess (43) comprising a cutaway in line with said flexible post (44), said second bearing zone (41) consisting of a portion of the flexible post (44) in line with the cutaway.

8. Motor mount according to any one of the preceding claims, wherein the inner ring (18) and the annular element (13) are distinct and connected to one another via at least one fastening means (23).

9. Motor mount according to Claim 10, wherein there is provided a device for taking up tangential clearance (58) between the annular element (13) and the inner ring (18).

10. Motor mount according to Claim 9, wherein the device for taking up tangential clearance (58) comprises at least one flexible tongue (59) originating from the annular element (13) and situated on the outer periphery of this annular element (13), said flexible tongue (59) resting against said decoupling means (21) .

11. Motor mount according to any one of claims 8 to 10, wherein there is provided a device for taking up axial clearance (49) between the annular element (13) and the inner ring (18).

12. Motor mount according to Claim 11, wherein the device for taking up axial clearance (49) comprises a finger (50) that originates from the annular element (13) and that is situated on the outer periphery of said annular element (13), said finger (50) extending in an angular sector crossing an angular sector in which the decoupling means (21) extends.
